# EUROPÄISCHE PATENTANMELDUNG

(11) **EP 4 530 704 A1**
(43) Veröffentlichungstag der Anmeldung: **02.04.2025**
(21) Anmeldenummer: 23200979.5
(22) Anmeldetag: 29.09.2023
(51) Int. Cl.: G02C 5/00, G02C 7/10

(54) **SONNENBRILLENVORRICHTUNG**

(71) Anmelder: Optrel Holding AG, 9630 Wattwil (CH)
(72) Erfinder: EGGER, Urs, 8722 Kaltbrunn (CH); HEUSSER, Jonathan, 8713 Uerikon (CH); ROSSI, Marco, 8712 Stäfa (CH)
(74) Vertreter: Daub, Thomas

(57) **Zusammenfassung**

Die Erfindung geht aus von einer Sonnenbrillenvorrichtung, insbesondere Sonnenbrille, mit zumindest einem Monoscheibenelement (12a; 12b), welches sich von einem ersten Sichtbereich (14a; 14b) über einen Nasenstegbereich (16a; 16b) in einen zweiten Sichtbereich (18a; 18b) erstreckt, mit zumindest einem an dem Monoscheibenelement (12a; 12b) angeordneten optischen Sonnenschutzfilter (20a; 20b), der zumindest eine Flüssigkristallzelle (22a; 22b) und eine Sensoreinheit (24a; 24b) aufweist, und mit einem umlaufenden Rahmen (26a; 26b).

Es wird vorgeschlagen, dass der umlaufenden Rahmen (26a; 26b) zumindest zu einem Großteil aus einem Metallwerkstoff besteht.

## Beschreibung

### Stand der Technik

Die Erfindung betrifft eine Sonnenbrillenvorrichtung.

Es ist bereits eine Sonnenbrillenvorrichtung, insbesondere eine Sonnenbrille, mit zumindest einem Monoscheibenelement, welches sich von einem ersten Sichtbereich über einen Nasenstegbereich in einen zweiten Sichtbereich erstreckt, mit zumindest einem an dem Monoscheibenelement angeordneten optischen Sonnenschutzfilter, der zumindest eine Flüssigkristallzelle und eine Sensoreinheit aufweist, und mit einem umlaufenden Rahmen, vorgeschlagen worden.

Die Aufgabe der Erfindung besteht insbesondere darin, eine gattungsgemäße Vorrichtung mit verbesserten Eigenschaften hinsichtlich einer Stabilität, einer Ästhetik sowie eines Sichtkomforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Sonnenbrillenvorrichtung, insbesondere einer Sonnenbrille, mit zumindest einem Monoscheibenelement, welches sich von einem ersten Sichtbereich über einen Nasenstegbereich in einen zweiten Sichtbereich erstreckt, mit zumindest einem an dem Monoscheibenelement angeordneten optischen Sonnenschutzfilter, der zumindest eine Flüssigkristallzelle und eine Sensoreinheit aufweist, und mit einem umlaufenden Rahmen.

Es wird vorgeschlagen, dass der umlaufende Rahmen zumindest zu einem Großteil aus einem Metallwerkstoff besteht. Die Sonnenbrillenvorrichtung ist insbesondere von einer Monoglas-Sonnenbrille gebildet. Vorzugsweise umfasst der umlaufende Rahmen zumindest eine Eisenlegierung, eine Aluminiumlegierung, eine Kupferlegierung, Nickelsilberlegierung oder dergleichen. Besonders bevorzugt besteht der umlaufende Rahmen aus Titan. Es wäre auch denkbar, dass der umlaufende Rahmen aus einem Metall enthaltenden Verbundwerkstoff besteht.

Unter einer "Sonnenbrillenvorrichtung" soll in diesem Zusammenhang insbesondere eine Vorrichtung verstanden werden, die zu einem Schutz der Augen eines Benutzers vor, insbesondere störender, Sonneneinstrahlung vorgesehen ist. Vorzugsweise soll darunter insbesondere eine Vorrichtung verstanden werden, welche dazu vorgesehen ist, eine Sonneneinstrahlung zumindest zu verringern. Besonders bevorzugt ist die Sonnenbrillenvorrichtung in zumindest einem Betriebszustand zu einer Abdunkelung einer, insbesondere störender, Sonneneinstrahlung auf die Augen des Benutzers vorgesehen. Vorzugsweise ist die Sonnenbrillenvorrichtung dazu vorgesehen, von einem Benutzer im Gesicht getragen zu werden. Bevorzugt ist die Sonnenbrillenvorrichtung insbesondere von einer Sonnenbrille gebildet. Ferner soll in diesem Zusammenhang unter einem "optischen Sonnenschutzfilter" insbesondere ein optischer Filter verstanden werden, welcher insbesondere ein Schutzglas und/oder ein Kunststoffschutzglas, insbesondere zu einem Schutz vor störender Sonneneinstrahlung, bildet. Vorzugsweise soll darunter insbesondere ein optischer Filter verstanden werden, dessen Lichtdurchlässigkeit einstellbar ausgeführt ist. Bevorzugt soll darunter insbesondere ein optischer Schutzfilter mit einer automatischen Verdunkelung verstanden werden. Besonders bevorzugt weist der Sonnenschutzfilter zumindest eine in der Transmission schaltbare Flüssigkristallebene auf. Vorzugsweise weist der optische Sonnenschutzfilter zumindest eine Flüssigkristallzelle auf. Es sind verschiedene, einem Fachmann als sinnvoll erscheinende Flüssigkristallzellen denkbar, wie insbesondere eine TN-Flüssigkristallzelle mit der Twisted-Nematic-Technik. Grundsätzlich wären jedoch auch andere, einem Fachmann als sinnvoll erscheinende Ausbildungen der Flüssigkristallzellen denkbar, wie beispielsweise als STN-Flüssigkristallzellen mit der Super-Twisted-Nematic-Technik, DSTN-Flüssigkristallzellen mit der Double-Super-Twisted-Nematic-Technik, TSTN-Flüssigkristallzellen mit der Triple-Super-Twisted-Nematic-Technik, VA-Flüssigkristallzellen mit der Vertical-Alignment-Technik, insbesondere PVA/MVA-Flüssigkristallzellen mit der Patterned-Vertical-Alignment- und/oder Multi-Domain-Vertical-Alignment-Technik, IPS-Flüssigkristallzellen mit der In-Plane-Switching-Technik, FLCD-Flüssigkristallzellen, also ferroelektrische Flüssigkristallzellen, und/oder TN-Flüssigkristallzellen mit der Guest-Host-Technik. Unter einer "Sensoreinheit" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, einem Fachmann als sinnvoll erscheinende Sensoreinheiten für eine Sonnenbrillenvorrichtung denkbar. Vorzugsweise weist die Sensoreinheit zumindest eine Photozelle, insbesondere eine Photodiode und/oder insbesondere eine Solarzelle, auf. Bevorzugt ist die Photozelle insbesondere zumindest zu einer optischen Detektion eines Sonnenlichts und/oder eines künstlichen Lichts vorgesehen. Des Weiteren soll in diesem Zusammenhang unter einer "Steuer- und/oder Regeleinheit" insbesondere eine Einheit mit zumindest einer Steuerelektronik verstanden werden. Unter einer "Steuerelektronik" soll insbesondere eine Einheit mit zumindest einer elektronischen Schaltung verstanden werden, welche vorzugsweise aus Spannungs- und Vergleichsregelbausteinen besteht. Grundsätzlich kann die Steuerelektronik jedoch auch komplexer aufgebaut sein, wie insbesondere durch die Nutzung einer anwendungsspezifischen integrierten Schaltung (ASIC) und/oder eines Mikrokontrollerbausteins.

Der optische Sonnenschutzfilter ist insbesondere dazu vorgesehen, seine Durchlässigkeit zumindest in Abhängigkeit von der Sonneneinstrahlung zu ändern. Es kann vorteilhaft eine hohe Anpassungsfähigkeit einer Sonnenbrillenvorrichtung an eine Sonneneinstrahlung gewährleistet werden. Unter einer "Durchlässigkeit" eines optischen Elements soll in diesem Zusammenhang insbesondere ein Transmissionsgrad von Sonnenlicht durch das optische Element verstanden werden. Vorzugsweise soll darunter insbesondere verstanden werden, inwieweit das sichtbare Spektrum des Sonnenlichts durch das optische Element absorbiert und/oder reflektiert wird. Besonders bevorzugt soll darunter eine Tönung verstanden werden.

Unter einem "Monoscheibenelement" soll in diesem Zusammenhang insbesondere ein Element verstanden werden, welches eine Brillenscheibe, insbesondere ein Brillenglas der Sonnenbrillenvorrichtung ausbildet. Vorzugsweise weist die Sonnenbrillenvorrichtung genau eine Brillenscheibe auf, welche sich von einem ersten Sichtbereich über einen Nasenstegbereich in einen zweiten Sichtbereich erstreckt. Das Monoscheibenelement ist insbesondere zumindest teilweise transparent ausgebildet, wobei das Monoscheibenelement insbesondere über eine Tönung und/oder eine Verspiegelung verfügen kann. Vorzugsweise ist das Monoscheibenelement farbig oder silbrig verspiegelt. Ein Tönungseffekt entsteht insbesondere durch Reflektion der entsprechenden Verspiegelungsfarbe. Es wäre jedoch auch eine Tönung des Monoscheibenelements denkbar. Das Monoscheibenelement besteht insbesondere zu einem Großteil aus einem Kunststoff. Das Monoscheibenelement besteht insbesondere zumindest teilweise aus Glas, Polycarbonat, Cellulosetriacetat oder einem anderen geeigneten Kunststoff.

Vorzugsweise weist die Sonnenbrillenvorrichtung einen Brillenrahmen auf, welcher den umlaufenden Rahmen und zumindest zwei Bügel umfasst. Die Bügel sind insbesondere beweglich an dem umlaufenden Rahmen gelagert. Der umlaufende Rahmen bildet insbesondere einen Grundrahmen der Sonnenbrillenvorrichtung aus.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Sonnenbrillenvorrichtung kann insbesondere eine vorteilhaft stabile Sonnenbrillenvorrichtung bereitgestellt werden.

Des Weiteren wird vorgeschlagen, dass das Monoscheibenelement, insbesondere direkt, formschlüssig mit dem umlaufenden Rahmen verbunden ist. Vorzugsweise ist das Monoscheibenelement insbesondere zumindest in dem Nasenstegbereich formschlüssig mit dem umlaufenden Rahmen verbunden. Das Monoscheibenelement ist vorzugsweise einstückig, insbesondere einteilig ausgebildet. Vorzugsweise umgibt der umlaufende Rahmen eine Außenkante des Monoscheibenelements. Der umlaufende Rahmen kann insbesondere ein- oder mehrteilig ausgebildet sein. Unter "formschlüssig" soll insbesondere verstanden werden, dass aneinanderliegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander. Ferner soll unter "direkt formschlüssig verbunden" insbesondere verstanden werden, dass zwei Bauteile direkt zu einer Bereitstellung der Verbindung zusammenwirken, insbesondere ineinandergreifen. Dadurch kann insbesondere auf ein Verkleben des Monoscheibenelements verzichtet werden. Ferner kann eine Zugbelastung auf den umlaufenden Rahmen insbesondere vorteilhaft von dem Monoscheibenelement aufgenommen werden.

Ferner wird vorgeschlagen, dass das Monoscheibenelement zumindest ein Formschlusselement aufweist, wobei der Rahmen zumindest ein mit dem Formschlusselement des Monoscheibenelements korrespondierendes Formschlusselement aufweist. Vorzugsweise bildet zumindest eines der Formschlusselemente einen Formschlussfortsatz aus, während ein weiteres Formschlusselement eine Formschlussausnehmung ausbildet. Ferner wäre denkbar, dass zumindest eines der Formschlusselemente von einem Rastelement gebildet ist. Bevorzugt bilden die Formschlusselemente insbesondere eine Rasteinheit aus. Unter einer "Rasteinheit" soll dabei insbesondere eine Einheit mit wenigstens einem Rastelement verstanden werden, das bei einem Befestigungsvorgang elastisch ausgelenkt wird, um anschließend durch eine innere Spannkraft hinter einem korrespondierenden Rastelement einzurasten. Unter einem "Rastelement" soll in diesem Zusammenhang insbesondere ein federelastisches Mittel zur Herstellung einer Rastverbindung verstanden werden, das dazu vorgesehen ist, bei einer Montage elastisch ausgelenkt zu werden. Besonders bevorzugt bildet zumindest eines der Formschlusselemente ein Knopflochverbindungselement oder ein Schwalbenschwanzverbindungselement aus und ein weiteres Formschlusselement der Verbindungselemente eine Knopflochverbindungsausnehmung oder Schwalbenschwanzverbindungsausnehmung aus. Vorzugsweise ist das zumindest eine Formschlusselement des Monoscheibenelements und das zumindest eine Formschlusselement des Rahmens in dem Nasenstegbereich der Sonnenbrillenvorrichtung angeordnet. Bevorzugt ist die Verbindung zwischen dem zumindest einen Formschlusselement des Monoscheibenelements und dem zumindest einen Formschlusselement des Rahmens zumindest dazu vorgesehen, Zugkräfte in dem Nasenstegbereich aufzunehmen. Vorzugsweise weist das Monoscheibenelement zwei Formschlusselemente auf, wobei ein erstes Formschlusselement des Monoscheibenelements in dem Nasenstegbereich auf einer Oberkante des Monoscheibenelements angeordnet ist und ein zweites Formschlusselement des Monoscheibenelements in dem Nasenstegbereich auf einer Unterkante des Monoscheibenelements angeordnet ist. Bevorzugt weist der Rahmen zwei Formschlusselemente auf, wobei ein erstes Formschlusselement des Rahmens an einem oberen Rahmenschenkel des Rahmens angeordnet ist und ein zweites Formschlusselement an einem unteren Rahmenschenkel des Rahmens angeordnet ist. Unter einem "Nasenstegbereich" soll in diesem Zusammenhang insbesondere ein Bereich der Sonnenbrillenvorrichtung verstanden werden, welcher zu einer Anordnung auf einem Nasenrücken eines Benutzers vorgesehen ist. Vorzugsweise ist der Nasenstegbereich zwischen einem ersten Sichtbereich für ein erstes Auge eines Benutzers und einem zweiten Sichtbereich für ein zweites Auge eines Benutzers. Dadurch kann insbesondere eine vorteilhaft formschlüssige Verbindung bereitgestellt werden.

Des Weiteren wird vorgeschlagen, dass das zumindest eine Formschlusselement des Rahmens von einem Formschlussfortsatz gebildet ist, wobei das Formschlusselement des Monoscheibenelements dazu vorgesehen ist, den Formschlussfortsatz zumindest teilweise zu umgreifen. Vorzugsweise ist das zumindest eine Formschlusselement des Rahmens von einem, insbesondere abgerundeten, Schwalbenschwanzfortsatz gebildet. Es wird ferner vorgeschlagen, dass der Rahmen zumindest eine Formschlussausnehmung aufweist, welche dazu vorgesehen ist, zumindest ein Formschlusselement des Monoscheibenelements aufzunehmen. Bevorzugt ist das Formschlusselement des Monoscheibenelements von einer, insbesondere abgerundeten, Schwalbenschwanzausnehmung gebildet. Dadurch kann insbesondere eine vorteilhaft formschlüssige Verbindung bereitgestellt werden.

Es wird ferner vorgeschlagen, dass der Rahmen einen oberen Rahmenschenkel und einen unteren Rahmenschenkel aufweist, wobei der Rahmen, insbesondere in dem Nasenstegbereich, frei von einem Zwischensteg zwischen dem oberen Rahmenschenkel und dem unteren Rahmenschenkel ausgebildet ist, wobei Zugkräfte zwischen einem oberen Rahmenschenkel des Rahmens und einem unteren Rahmenschenkel über das Monoscheibenelement übertragen werden. Vorzugsweise werden Zugkräfte zwischen dem oberen Rahmenschenkel des Rahmens und dem unteren Rahmenschenkel des Rahmens über die formschlüssige Verbindung zwischen dem Monoscheibenelement und dem Rahmen in dem Nasenstegbereich übertragen. Bevorzugt ist der obere Rahmenschenkel und der untere Rahmenschenkel in dem Nasenstegbereich lediglich über das Monoscheibenelement verbunden. Dadurch kann insbesondere eine vorteilhafte Optik der Sonnenbrillenvorrichtung erreicht werden. Ferner kann auf einen störenden Zwischensteg in den Nasenstegbereich verzichtet werden. Hierdurch kann wiederum ein vorteilhaft großes Sichtfeld ermöglicht werden.

Es wird ferner vorgeschlagen, dass der Rahmen einstückig, insbesondere einteilig, ausgebildet ist. Alternativ wäre auch denkbar, dass der Rahmen zweiteilig ausgeführt ist, wobei der obere Rahmenschenkel und der untere Rahmenschenkel lösbar, wie beispielsweise mittels einer Verschraubung miteinander verbunden sind. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Dadurch kann insbesondere ein vorteilhaft stabiler Rahmen bereitgestellt werden.

Es wird ferner vorgeschlagen, dass die Sonnenbrillenvorrichtung einen Zwischenrahmen aufweist, welcher zumindest teilweise zwischen dem Rahmen und dem Monoscheibenelement angeordnet ist. Vorzugsweise ist der Zwischenrahmen dazu vorgesehen, einen Übergang zwischen dem Monoscheibenelement und dem umlaufenden Rahmen zu schaffen. Zusätzlich kann der Zwischenrahmen Abdeckfunktionen aufweisen. Insbesondere ist der Zwischenrahmen dazu vorgesehen, zumindest teilweise eine Elektronik, insbesondere die Steuer- und/oder Regeleinheit des optischen Sonnenschutzfilters zu verdecken, insbesondere teilweise einzuhausen. Bevorzugt ist der Zwischenrahmen ferner dazu vorgesehen, zumindest teilweise eine Außenkante der Flüssigkristallzelle zu verdecken. Vorzugsweise umgibt der Zwischenrahmen das Monoscheibenelement vollständig. Der Zwischenrahmen erstreckt sich insbesondere entlang einer Außenkante des Monoscheibenelements. Vorzugsweise ist der Zwischenrahmen formschlüssig zwischen dem umlaufenden Rahmen und dem Monoscheibenelement gehalten. Vorzugsweise kann mittels des Zwischenrahmens insbesondere ein zusätzlicher Schutz des Monoscheibenelements bereitgestellt werden. Ferner kann insbesondere ein zusätzlicher Schutz des optischen Sonnenschutzfilters bereitgestellt werden.

Es wird weiter vorgeschlagen, dass der Zwischenrahmen zumindest zu einem Großteil aus einem Kunststoff, insbesondere einem Polymer, besteht. Durch den Zwischenrahmen kann insbesondere ein vorteilhafter Schutz zwischen dem Rahmen aus dem Metallwerkstoff und dem Monoscheibenelement bereitgestellt werden.

Ferner wird vorgeschlagen, dass der Zwischenrahmen, insbesondere in einem Nasenstegbereich, zumindest eine Ausnehmung begrenzt. Vorzugsweise ist die Ausnehmung von einer Durchgangsausnehmung gebildet, welche in einem oberen Rahmenschenkel des Zwischenrahmens in dem Nasenstegbereich angeordnet ist. Vorzugsweise ist die Ausnehmung insbesondere von einem Längsschlitz gebildet. Bevorzugt erstreckt sich die zumindest eine Ausnehmung von dem Monoscheibenelement zu dem umlaufenden Rahmen. Vorzugsweise erstreckt sich die Ausnehmung insbesondere parallel zu einer Haupterstreckungsebene des Monoscheibenelements durch den Zwischenrahmen. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Bevorzugt weist der Zwischenrahmen ferner eine weitere Ausnehmung auf, welche in einem unteren Rahmenschenkel des Zwischenrahmens in dem Nasenstegbereich angeordnet ist. Vorzugsweise ist die weitere Ausnehmung ebenfalls von einer Durchgangsausnehmung gebildet. Dadurch kann insbesondere ein vorteilhafter Zwischenrahmen bereitgestellt werden. Ferner kann dadurch insbesondere ermöglicht werden, dass der Rahmen und das Monoscheibenelement durch den Zwischenrahmen hindurch miteinander verbindbar sind.

Des Weiteren wird vorgeschlagen, dass sich das zumindest eine Formschlusselement des Rahmens und/oder das zumindest eine Formschlusselement des Monoscheibenelements zumindest teilweise durch die Ausnehmung des Zwischenrahmens hindurch erstreckt. Vorzugsweise erstreckt sich das zumindest eine Formschlusselement des Rahmens zumindest teilweise durch die Ausnehmung des Zwischenrahmens hindurch zu dem zumindest einen Formschlusselement des Monoscheibenelements. Bevorzugt sind die Formschlusselemente durch die Ausnehmung hindurch miteinander verbunden. Dadurch kann dadurch insbesondere ermöglicht werden, dass der Rahmen und das Monoscheibenelement durch den Zwischenrahmen hindurch miteinander verbunden sind. Hierdurch kann eine vorteilhaft stabile Verbindung zwischen dem Rahmen und dem Monoscheibenelement bereitgestellt werden. Alternativ wäre jedoch auch denkbar, dass der Zwischenrahmen ein Formschlusselement aufweist, welches dazu vorgesehen ist, mit dem Formschlusselement des Rahmens zusammenzuwirken, und ein Formschlusselement aufweist, welches dazu vorgesehen ist, mit dem Formschlusselement des Monoscheibenelements zusammenzuwirken. Hierdurch könnte insbesondere eine indirekte formschlüssige Verbindung zwischen dem Rahmen und dem Monoscheibenelement ermöglicht werden.

Es wird ferner vorgeschlagen, dass die Ausnehmung von einer materiell in zumindest einer Ebene vollständig von dem Zwischenrahmen umschlossenen Durchgangsausnehmung gebildet ist. Vorzugsweise erstreckt sich die Ausnehmung insbesondere parallel zu einer Haupterstreckungsebene des Monoscheibenelements durch den Zwischenrahmen. Bevorzugt ist die Ausnehmung in einer Ebene senkrecht zu der Haupterstreckungsebene des Monoscheibenelements materiell vollständig von dem Zwischenrahmen umschlossen. Vorzugsweise ist die Ausnehmung in einem montierten Zustand der Sonnenbrillenvorrichtung von außen vollständig verdeckt ausgebildet. Vorzugsweise ist die Ausnehmung insbesondere von einem Längsschlitz gebildet. Dadurch kann insbesondere ein vorteilhafter Zwischenrahmen bereitgestellt werden. Ferner kann dadurch insbesondere ermöglicht werden, dass der Rahmen und das Monoscheibenelement durch den Zwischenrahmen hindurch miteinander verbindbar sind.

Es wird weiter vorgeschlagen, dass die Flüssigkristallzelle des optischen Sonnenschutzfilters stoffschlüssig mit dem Monoscheibenelement verbunden ist. Vorzugsweise ist die Flüssigkristallzelle des optischen Sonnenschutzfilters auf das Monoscheibenelement aufgeklebt. Die Flüssigkristallzelle ist insbesondere auf einer Innenseite des Monoscheibenelements angeordnet, welche in einem getragenen Zustand einem Benutzer zugewandt ist. Es wäre jedoch auch eine andere, einem Fachmann als sinnvoll erscheinende Anordnung denkbar. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben und/oder Vulkanisieren. Dadurch kann insbesondere eine vorteilhaft stabile Sonnenbrillenvorrichtung bereitgestellt werden. Es kann ferner insbesondere eine vorteilhaft optisch ansprechende Sonnenbrillenvorrichtung bereitgestellt werden.

Zudem wird vorgeschlagen, dass die Flüssigkristallzelle des optischen Sonnenschutzfilters definiert, insbesondere mit einem konstanten Abstand, von einem Rand des Monoscheibenelements beabstandet angeordnet ist. Vorzugsweise ist die Flüssigkristallzelle mit einem Rand umlaufend mit einem konstanten Abstand zu einem Rand des Monoscheibenelements angeordnet. Die Flüssigkristallzelle springt insbesondere gegenüber dem Rand des Monoscheibenelements zurück. Ein minimaler Abstand zwischen einem Rand des Monoscheibenelements und einem Rand der Flüssigkristallzelle beträgt insbesondere zumindest 1 mm, vorzugsweise zumindest 2 mm und besonders bevorzugt maximal 3 mm. Bevorzugt ist der minimale Abstand umlaufend konstant, wobei der minimale Abstand zwischen dem Rand des Monoscheibenelements und dem Rand der Flüssigkristallzelle maximal 10 mm, vorzugsweise maximal 8 mm und besonders bevorzugt maximal 5 mm beträgt. Dadurch kann insbesondere eine Beschädigung der Flüssigkristallzelle insbesondere durch den umlaufenden Rahmen vermieden werden. Vorzugsweise ist der Abstand zwischen dem Rand der Flüssigkristallzelle und dem Rand des Monoscheibenelements von dem Zwischenrahmen zumindest teilweise verdeckt.

Ferner geht die Erfindung aus von einem Verfahren zur Herstellung der Sonnenbrillenvorrichtung.

Die erfindungsgemäße Sonnenbrillenvorrichtung und/oder das erfindungsgemäße Verfahren sollen/soll hierbei nicht auf die oben beschriebene Anwendung und Ausführungsform beschränkt sein. Insbesondere können/kann die erfindungsgemäße Sonnenbrillenvorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Sonnenbrillenvorrichtung mit einem Brillenrahmen, mit einem Zwischenrahmen, mit einem Monoscheibenelement und mit einem optischen Sonnenschutzfilter in einer schematischen Darstellung,
- Fig. 2: die erfindungsgemäße Sonnenbrillenvorrichtung mit dem Brillenrahmen, mit dem Zwischenrahmen, mit dem Monoscheibenelement und mit dem optischen Sonnenschutzfilter in einer schematischen Explosionsdarstellung,
- Fig. 3: einen Teilausschnitt der erfindungsgemäßen Sonnenbrillenvorrichtung in einer schematischen Schnittdarstellung in einer Haupterstreckungsebene des Monoscheibenelements,
- Fig. 4: einen Teilausschnitt der erfindungsgemäßen Sonnenbrillenvorrichtung in einer schematischen Schnittdarstellung senkrecht zu der Haupterstreckungsebene des Monoscheibenelements,
- Fig. 5: einen Teilausschnitt des Brillenrahmens und des Zwischenrahmens in einer schematischen Darstellung,
- Fig. 6: ein schematisches Ablaufdiagramm eines Verfahrens zur Herstellung, insbesondere Montage, der erfindungsgemäßen Sonnenbrillenvorrichtung,
- Fig. 7: eine alternative erfindungsgemäße Sonnenbrillenvorrichtung mit einem Brillenrahmen, mit einem Monoscheibenelement und mit einem optischen Sonnenschutzfilter in einer schematischen Darstellung,
- Fig. 8: die alternative erfindungsgemäße Sonnenbrillenvorrichtung mit dem Brillenrahmen, mit dem Monoscheibenelement und mit dem optischen Sonnenschutzfilter in einer schematischen Explosionsdarstellung,
- Fig. 9: einen Teilausschnitt der alternativen erfindungsgemäßen Sonnenbrillenvorrichtung in einer schematischen Schnittdarstellung in einer Haupterstreckungsebene des Monoscheibenelements,
- Fig. 10: einen Teilausschnitt der alternativen erfindungsgemäßen Sonnenbrillenvorrichtung in einer schematischen Schnittdarstellung senkrecht zu der Haupterstreckungsebene des Monoscheibenelements und
- Fig. 11: einen Teilausschnitt des Brillenrahmens in einer schematischen Darstellung.

### Beschreibung der Ausführungsbeispiele

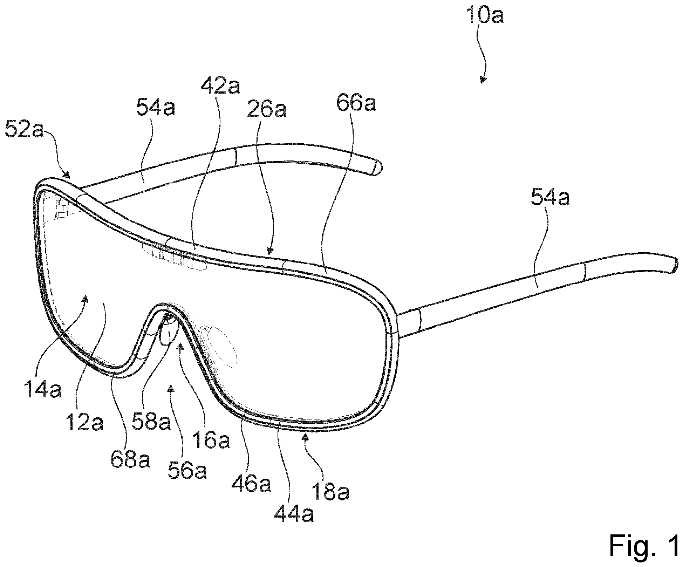

Die Figur 1 zeigt eine Sonnenbrillenvorrichtung 10a. Die Sonnenbrillenvorrichtung 10a ist von einer Sonnenbrille gebildet. Die Sonnenbrillenvorrichtung 10a ist von einer Monoglas-Sonnenbrille gebildet. Es ist alternativ auch denkbar, dass die Sonnenbrillenvorrichtung 10a als eine Sonnenschutzblende, eine Skibrille, eine Motorradbrille, eine Arbeitsschutzbrille oder dergleichen ausgebildet ist. Die Sonnenbrillenvorrichtung 10a dunkelt selbsttätig in Abhängigkeit von einer Sonneneinstrahlung ab. Grundsätzlich wäre jedoch auch eine andere, einem Fachmann als sinnvoll erscheinende Ausbildung der Sonnenbrillenvorrichtung 10a denkbar. Die Sonnenbrillenvorrichtung 10a ist zumindest in einem Betriebszustand zu einer Abdunkelung einer Sonneneinstrahlung auf die Augen eines Benutzers vorgesehen.

Die Sonnenbrillenvorrichtung 10a umfasst zumindest einen Brillenrahmen 52a. Der Brillenrahmen 52a ist von einem Brillengestell gebildet. Der Brillenrahmen 52a besteht im Wesentlichen aus einem Metallwerkstoff. Der Brillenrahmen 52a weist einen umlaufenden Rahmen 26a auf. Die Sonnenbrillenvorrichtung 10a weist den umlaufenden Rahmen 26a auf. Ferner weist der Brillenrahmen 52a zwei an dem umlaufenden Rahmen 26a beweglich gelagerte Brillenbügel 54a auf. Die Brillenbügel 54a sind jeweils zu einer Auflage auf den Ohren des Benutzers vorgesehen. Der Rahmen 26a bildet einen Nasenausschnitt 56a zu einer Auflage auf einer Nase des Benutzers aus. An dem Rahmen 26a sind dazu in einem Bereich des Nasenausschnitts 56a Nasenpadhalter mit daran angeordneten Nasenpads 58a angeordnet. Der umlaufende Rahmen 26a besteht zumindest zu einem Großteil aus einem Metallwerkstoff. Der Rahmen 26a besteht vollständig aus Metall, insbesondere aus einer Metalllegierung. Es wäre jedoch auch denkbar, dass der Rahmen 26a aus einem Metall enthaltenden Verbundwerkstoff besteht. Der umlaufende Rahmen 26a weist ferner einen oberen Rahmenschenkel 42a und einen unteren Rahmenschenkel 44a auf. Der Rahmen 26a ist in einem Nasenstegbereich 16a frei von einem Zwischensteg zwischen dem oberen Rahmenschenkel 42a und dem unteren Rahmenschenkel 44a ausgebildet. Der obere Rahmenschenkel 42a und der untere Rahmenschenkel 44a sind lediglich in den beiden Anbindungspunkten der Brillenbügel 54a miteinander verbunden. Der Rahmen 26a ist mehrteilig, insbesondere zweiteilig, ausgebildet, wobei der obere Rahmenschenkel 42a und der untere Rahmenschenkel 44a lösbar mittels einer Verschraubung miteinander verbunden sind. Der obere Rahmenschenkel 42a und der untere Rahmenschenkel 44a sind in einem Anbindungspunkt der Brillenbügel 54a miteinander verschraubt. Alternativ wäre auch denkbar, dass der Rahmen 26a einstückig, insbesondere einteilig, ausgebildet ist. Die Nasenpadhalter sind einstückig mit dem unteren Rahmenschenkel 44a ausgebildet.

Ferner weist die Sonnenbrillenvorrichtung 10a ein Monoscheibenelement 12a auf. Das Monoscheibenelement 12a erstreckt sich von einem ersten Sichtbereich 14a über den Nasenstegbereich 16a in einen zweiten Sichtbereich 18a der Sonnenbrillenvorrichtung 10a. Das Monoscheibenelement 12a ist einstückig, insbesondere einteilig, ausgebildet. Der umlaufende Rahmen 26a umgibt eine Außenkante 62a des Monoscheibenelements 12a. Das Monoscheibenelement 12a besteht zu einem Großteil aus einem Kunststoff. Das Monoscheibenelement 12a besteht zumindest teilweise aus Glas, Polycarbonat, Cellulosetriacetat oder einem anderen geeigneten Kunststoff. Das Monoscheibenelement 12a besteht aus Polycarbonat. Die Sonnenbrillenvorrichtung 10a weist genau ein Monoscheibenelement 12a auf, wobei insbesondere kein weiteres Scheibenelement vorgesehen ist. Das Monoscheibenelement 12a ist transparent ausgebildet, wobei das Monoscheibenelement 12a eine Tönung und/oder Verspiegelung ausweisen kann. Das Monoscheibenelement 12a ist in dem ersten Sichtbereich 14a, in dem Nasenstegbereich 16a und in dem zweiten Sichtbereich 18a transparent ausgebildet. Das Monoscheibenelement 12a weist eine konstante Dicke auf. Es wäre jedoch auch eine nicht konstante Dicke des Monoscheibenelements 12a denkbar. Die Dicke ist nicht zwingend konstant. Durch ein Monoscheibenelement 12a mit unterschiedlicher Dicke können insbesondere um optische Verzerrungen korrigiert werden. Ferner ist das Monoscheibenelement 12a in dem Nasenstegbereich 16a in einer Querrichtung verjüngt ausgebildet. Das Monoscheibenelement 12a weist in dem Nasenstegbereich 16a einen dem Nasenausschnitt 56a des Rahmens 26a folgenden Nasenausschnitt auf.

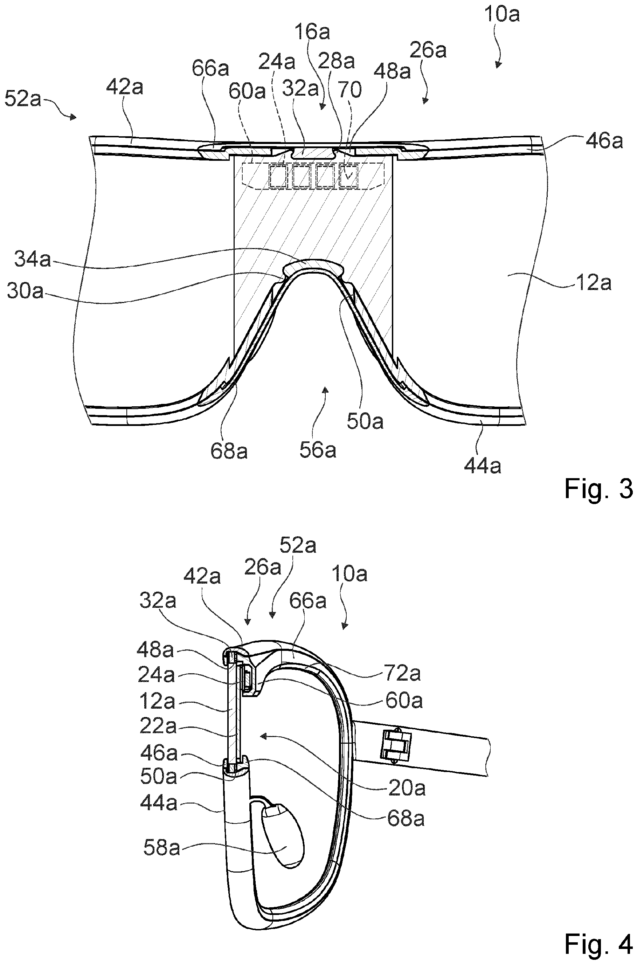

Das Monoscheibenelement 12a ist direkt formschlüssig mit dem umlaufenden Rahmen 26a verbunden. Das Monoscheibenelement 12a ist zumindest in dem Nasenstegbereich 16a formschlüssig mit dem umlaufenden Rahmen 26a verbunden. Das Monoscheibenelement 12a weist zumindest ein Formschlusselement 28a, 30a auf. Das Monoscheibenelement 12a weist beispielhaft zwei Formschlusselemente 28a, 30a in dem Nasenstegbereich 16a auf, wobei ein erstes Formschlusselement 28a dem oberen Rahmenschenkel 42a zugewandten ist und ein zweites Formschlusselement 30a dem unteren Rahmenschenkel 44a zugewandt ist. Der Rahmen 26a weist zumindest ein mit dem zumindest einen Formschlusselement 28a, 30a des Monoscheibenelements 12a korrespondierendes Formschlusselement 32a, 34a auf. Der Rahmen 26a weist beispielhaft zwei Formschlusselemente 32a, 34a auf, wobei ein erstes Formschlusselement 32a in dem Nasenstegbereich 16a an dem oberen Rahmenschenkel 42a angeordnet ist und ein zweites Formschlusselement 34a in dem Nasenstegbereich 16a an dem unteren Rahmenschenkel 44a angeordnet ist. Die Formschlusselemente 32a, 34a des Rahmens 26a sind jeweils von einem Formschlussfortsatz gebildet, welcher in Richtung des Monoscheibenelements 12a ragt. Die Formschlusselemente 32a, 34a des Rahmens 26a sind jeweils, insbesondere mittels Schweißen, an den oberen Rahmenschenkel 42a bzw. den unteren Rahmenschenkel 44a angeformt. Die Formschlusselemente 32a, 34a des Rahmens 26a sind jeweils von einem Schwalbenschwanzfortsatz mit abgerundeten Ecken gebildet. Es wäre jedoch auch eine andere, einem Fachmann als sinnvoll erscheinende Ausgestaltung der Formschlusselemente 32a, 34a denkbar. Die Formschlusselemente 28a, 30a des Monoscheibenelements 12a sind jeweils dazu vorgesehen, den Formschlussfortsatz teilweise zu umgreifen. Die Formschlusselemente 28a, 30a des Monoscheibenelements 12a umgreifen jeweils eines der Formschlusselemente 32a, 34a des Rahmens 26a in einer Ebene parallel zu der Haupterstreckungsebene des Monoscheibenelements 12a. Die Formschlusselemente 28a, 30a des Monoscheibenelements 12a bilden jeweils eine abgerundete Schwalbenschwanzausnehmung aus, welche zu der Form der Formschlusselemente 32a, 34a des Rahmens 26a korrespondierend ausgebildet ist. Die Formschlusselemente 28a, 30a des Monoscheibenelements 12a weisen jeweils beidseitig der Schwalbenschwanzausnehmung hervorstehende Nasen aus, welche die Schwalbenschwanzausnehmung begrenzen und ausbilden. Die Nasen der Formschlusselemente 28a, 30a ragen dabei über eine reguläre Kontur des Monoscheibenelements 12a hinaus. Die Nasen der Formschlusselemente 28a, 30a ragen in eine Ebene parallel zu einer Haupterstreckungsebene des Monoscheibenelements 12a aus einer regulären Kontur des Monoscheibenelements 12a hinaus. Die Formschlusselemente 28a, 30a des Monoscheibenelements 12a sind an einer Außenkante 62a des Monoscheibenelements 12a in den Nasenstegbereich 16a angeordnet (Figur 3).

Zugkräfte zwischen dem oberen Rahmenschenkel 42a des Rahmens 26a und dem unteren Rahmenschenkel 44a des Rahmens 26a werden über das Monoscheibenelement 12a übertragen. Zugkräfte zwischen dem oberen Rahmenschenkel 42a des Rahmens 26a und dem unteren Rahmenschenkel 44a des Rahmens 26a werden über die formschlüssige Verbindung zwischen dem Monoscheibenelement 12a und dem Rahmen 26a in dem Nasenstegbereich 16a übertragen. Der obere Rahmenschenkel 42a und der untere Rahmenschenkel 44a sind in dem Nasenstegbereich 16a lediglich über das Monoscheibenelement 12a verbunden.

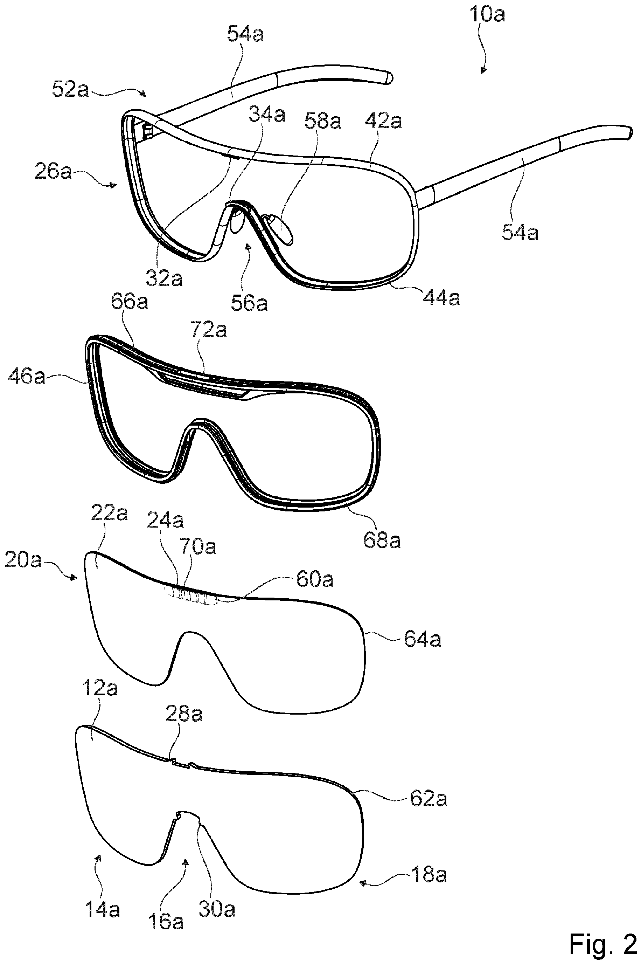

Ferner weist die Sonnenbrillenvorrichtung 10a einen Zwischenrahmen 46a auf, welcher zumindest teilweise zwischen dem Rahmen 26a und dem Monoscheibenelement 12a angeordnet ist. Der Zwischenrahmen 46a ist dazu vorgesehen, einen Übergang zwischen dem Monoscheibenelement 12a und dem umlaufenden Rahmen 26a zu schaffen. Zusätzlich weist der Zwischenrahmen 46a Abdeckfunktionen auf. Der Zwischenrahmen 46a ist dazu vorgesehen, zumindest teilweise eine Elektronik, insbesondere einer Steuer- und/oder Regeleinheit 60a eines optischen Sonnenschutzfilters 20a zu verdecken, insbesondere teilweise einzuhausen. Ferner ist der Zwischenrahmen 46a dazu vorgesehen, eine Außenkante 64a einer Flüssigkristallzelle 22a des optischen Sonnenschutzfilters 20a zu verdecken. Der Zwischenrahmen 46a ist umlaufend ausgebildet. Der Zwischenrahmen 46a umgibt das Monoscheibenelement 12a. Der Zwischenrahmen 46a erstreckt sich entlang einer Außenkante 62a des Monoscheibenelements 12a. Der Zwischenrahmen 46a erstreckt sich entlang der Außenkante 62a des Monoscheibenelements 12a. Der Zwischenrahmen 46a ist formschlüssig zwischen dem umlaufenden Rahmen 26a und dem Monoscheibenelement 12a gehalten. Der Zwischenrahmen 46a liegt an einer Innenseite des umlaufenden Rahmens 26a an. Der Zwischenrahmen 46a ist einteilig ausgebildet. Der Zwischenrahmen 46a weist einen oberen Zwischenrahmenschenkel 66a, welcher sich im Wesentlichen parallel zu dem oberen Rahmenschenkel 42a des Rahmens 26a erstreckt, und einen unteren Zwischenrahmenschenkel 68a auf, welcher sich im Wesentlichen parallel zu dem unteren Rahmenschenkel 44a des Rahmens 26a erstreckt. Der Zwischenrahmen 46a besteht zumindest zu einem Großteil aus einem Kunststoff, insbesondere einem Polymer (Figur 2, 4).

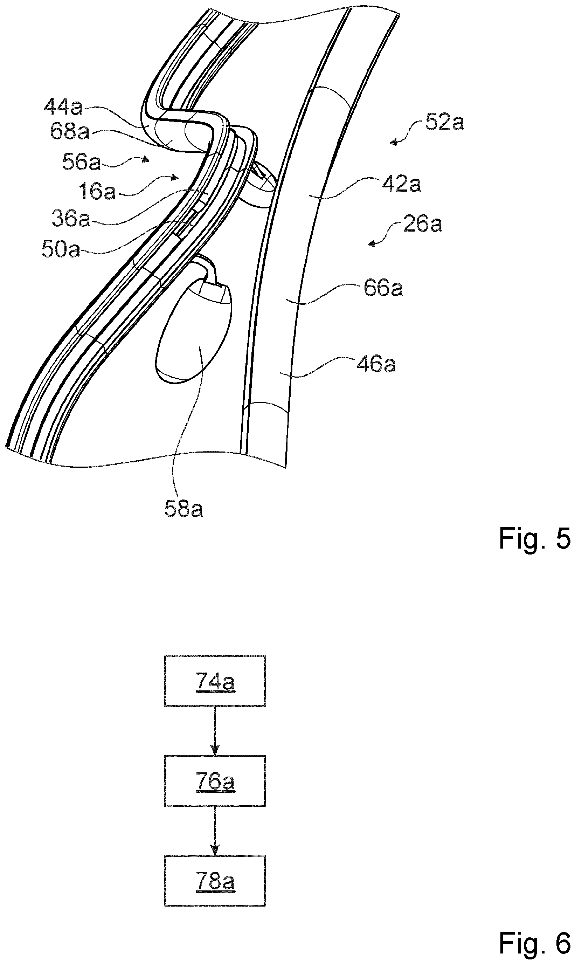

Der Zwischenrahmen 46a begrenzt in dem Nasenstegbereich 16a zumindest eine Ausnehmung 48a, 50a. Der Zwischenrahmen 46a begrenzt in dem Nasenstegbereich 16a zwei Ausnehmungen 48a, 50a, wobei eine erste Ausnehmung 48a in dem Nasenstegbereich 16a in dem dem oberen Rahmenschenkel 42a des Rahmens 26a zugewandten oberen Zwischenrahmenschenkel 66a angeordnet ist und eine zweite Ausnehmung 50a in dem Nasenstegbereich 16a in dem dem unteren Rahmenschenkel 44a des Rahmens 26a zugewandten unteren Zwischenrahmenschenkel 68a angeordnet ist. Die Ausnehmungen 48a, 50a sind jeweils von einer materiell in zumindest einer Ebene vollständig von dem Zwischenrahmen 46a umschlossenen Durchgangsausnehmung gebildet. Die Ausnehmungen 48a, 50a erstrecken sich jeweils parallel zu der Haupterstreckungsebene des Monoscheibenelements 12a durch den Zwischenrahmen 46a. Die Ausnehmungen 48a, 50a sind jeweils in einer Ebene senkrecht zu der Haupterstreckungsebene des Monoscheibenelements 12a materiell vollständig von dem Zwischenrahmen 46a umschlossen. Die Ausnehmungen 48a, 50a sind in einem montierten Zustand der Sonnenbrillenvorrichtung 10a von außen vollständig verdeckt ausgebildet. Die Ausnehmungen 48a, 50a sind jeweils von einem Längsschlitz gebildet. Ferner erstrecken sich die Ausnehmungen 48a, 50a jeweils von dem Monoscheibenelement 12a durch den Zwischenrahmen 46a zu dem umlaufenden Rahmen 26a. Die Ausnehmungen 48a, 50a erstrecken sich parallel zu der Haupterstreckungsebene des Monoscheibenelements 12a durch den Zwischenrahmen 46a (Figur 4, 5).

Die Formschlusselemente 32a, 34a des Rahmens 26a und die Formschlusselemente 28a, 30a des Monoscheibenelements 12a erstrecken sich jeweils zumindest teilweise durch eine der Ausnehmungen 48a, 50a des Zwischenrahmens 46a hindurch. Die Formschlusselemente 32a, 34a des Rahmens 26a erstecken sich zumindest teilweise durch die Ausnehmungen 48a, 50a des Zwischenrahmens 46a hindurch zu dem jeweils korrespondierenden Formschlusselement 28a, 30a des Monoscheibenelements 12a. Das erste Formschlusselement 32a des Rahmens 26a erstreckt sich durch die erste Ausnehmung 48a des Zwischenrahmens 46a zu dem ersten Formschlusselement 28a des Monoscheibenelements 12a. Das erste Formschlusselement 28a des Monoscheibenelements 12a ragt teilweise in die erste Ausnehmung 48a des Zwischenrahmens 46a. Das zweite Formschlusselement 34a des Rahmens 26a erstreckt sich durch die zweite Ausnehmung 50a des Zwischenrahmen 46a zu dem zweiten Formschlusselement 30a des Monoscheibenelements 12a. Das zweite Formschlusselement 30a des Monoscheibenelements 12a ragt teilweise in die zweite Ausnehmung 50a des Zwischenrahmens 46a. Die Formschlusselemente 28a, 30a, 32a, 34a sind durch die Ausnehmungen 48a, 50a hindurch miteinander verbunden.

Die Sonnenbrillenvorrichtung 10a umfasst zumindest einen an dem Monoscheibenelement 12a angeordneten optischen Sonnenschutzfilter 20a. Eine Lichtdurchlässigkeit des optischen Sonnenschutzfilters 20a ist einstellbar ausgeführt. Der optische Sonnenschutzfilter 20a ist im Wesentlichen transparent ausgebildet, wobei eine Transmission des optischen Sonnenschutzfilters 20a zumindest teilweise elektrisch veränderbar ausgebildet ist. Der optische Sonnenschutzfilter 20a weist zumindest eine Flüssigkristallzelle 22a auf. Die Flüssigkristallzelle 22a ist auf dem Monoscheibenelement 12a angeordnet. Die Flüssigkristallzelle 22a des optischen Sonnenschutzfilters 20a ist stoffschlüssig mit dem Monoscheibenelement 12a verbunden. Die Flüssigkristallzelle 22a des optischen Sonnenschutzfilters 20a ist auf das Monoscheibenelement 12a aufgeklebt. Die Flüssigkristallzelle 22a ist auf einer Innenseite des Monoscheibenelements 12a angeordnet, welche in einem getragenen Zustand einem Benutzer zugewandt ist. Es wäre jedoch auch eine andere, einem Fachmann als sinnvoll erscheinende Anordnung der Flüssigkristallzelle 22a denkbar. Die Flüssigkristallzelle 22a ist in Form einer mehrschichtigen Folie aufgebaut. Die Flüssigkristallzelle 22a des optischen Sonnenschutzfilters 20a ist definiert mit einem konstanten Abstand von einem Rand, insbesondere einer Außenkante 62a des Monoscheibenelements 12a beabstandet angeordnet. Bevorzugt ist der Abstand in einem Nasenstegbereich 16a abschnittsweise zu einer Anordnung einer Sensoreinheit 24a des optischen Sonnenschutzfilters 20a vergrößert. Die Flüssigkristallzelle 22a ist mit der Außenkante 64a umlaufend mit einem im Wesentlichen konstanten Abstand zu der Außenkante 62a des Monoscheibenelements 12a angeordnet. Die Flüssigkristallzelle 22a springt gegenüber der Außenkante 62a des Monoscheibenelements 12a zurück. Ein minimaler Abstand zwischen der Außenkante 62a des Monoscheibenelements 12a und der Außenkante 64a der Flüssigkristallzelle 22a beträgt insbesondere zumindest 1 mm, vorzugsweise zumindest 2 mm und besonders bevorzugt maximal 3 mm. Bevorzugt ist der minimale Abstand umlaufend konstant, wobei der minimale Abstand zwischen der Außenkante 62a des Monoscheibenelements 12a und der Außenkante 64a der Flüssigkristallzelle 22a maximal 10 mm, vorzugsweise maximal 8 mm und besonders bevorzugt maximal 5 mm beträgt. Der Zwischenrahmen 46a verdeckt umlaufend die zurückspringende Außenkante 64a der Flüssigkristallzelle 22a des optischen Sonnenschutzfilters 20a.

Die Flüssigkristallzelle 22a weist eine in der Transmission schaltbare Flüssigkristallebene auf. Die Flüssigkristallzelle 22a des optischen Sonnenschutzfilters 20a ist von einer Kunststoff-Flüssigkristallzelle gebildet. Die Flüssigkristallzelle 22a besteht aus mehreren Schichten. Eine Anzahl von Schichten ist hierbei lediglich beispielhaft und kann grundsätzlich variieren. Die Flüssigkristallzelle 22a ist von einer TN-Flüssigkristallzelle gebildet. Die Flüssigkristallzelle 22a basiert daher auf der Twisted-Nematic-Technik. Grundsätzlich wäre jedoch auch eine andere, einem Fachmann als sinnvoll erscheinende Ausbildung der Flüssigkristallzelle 22a denkbar. Die Flüssigkristallebene ist von einer transluzenten Flüssigkristallebene gebildet. Die Flüssigkristallebene weist eine Flüssigkristallschicht auf. In der Flüssigkristallschicht befindet sich eine Vielzahl von Kristallmolekülen sowie Abstandshalter. Auf beiden Seiten der Flüssigkristallschicht ist jeweils eine Polyimid-Schicht angeordnet. Die Polyimid-Schichten dienen insbesondere einer Ausrichtung der Kristallmoleküle. Auf den der Flüssigkristallschicht abgewandten Seiten der Polyimid-Schichten ist jeweils eine Elektrodenschicht angeordnet. Die Elektrodenschichten sind jeweils von einer transparenten Indiumzinnoxid-Schicht gebildet. Ferner befindet sich auf beiden Seiten der Flüssigkristallebene jeweils eine Polarisationsschicht. Die Polarisationsschichten dienen jeweils zu einer Polarisation einfallenden Lichts.

Des Weiteren weist der optische Sonnenschutzfilter 20a die Sensoreinheit 24a auf. Die Sensoreinheit 24a ist zu einer Erfassung einer Sonneneinstrahlung vorgesehen. Die Sensoreinheit 24a weist eine Sensorfläche 70a auf, welche zu einer Erfassung einer Sonneneinstrahlung vorgesehen ist. Die Sensoreinheit 24a weist eine oder mehrere Photodioden auf, die von einer Photozelle gebildet ist/sind. Grundsätzlich wäre jedoch auch denkbar, dass die Sensoreinheit 24a beispielsweise eine Solarzelle aufweist. Ferner wäre beispielsweise denkbar, dass zumindest ein Teil der Sensoreinheit 24a, wie beispielsweise einzelne Photodioden, als Streifen in einem Stirnbereich der Sonnenbrillenvorrichtung 10a angeordnet sind. Die Sensoreinheit 24a ist unter dem oberen Rahmenschenkel 42a des Rahmens 26a hinter dem Monoscheibenelement 12a angeordnet. Die Sensoreinheit 24a ist von dem Monoscheibenelement 12a verdeckt angeordnet.

Ferner weist der optische Sonnenschutzfilter 20a eine Steuer- und/oder Regeleinheit 60a auf. Die Steuer- und/oder Regeleinheit 60a ist dazu vorgesehen, abhängig von einer Sonneneinstrahlung eine Durchlässigkeit der Flüssigkristallzelle 22a zu steuern. Die Steuer- und/oder Regeleinheit 60a ist dazu nicht weiter sichtbar mit der Sensoreinheit 24a verbunden. Ferner ist die Steuer- und/oder Regeleinheit 60a nicht weiter sichtbar mit der Flüssigkristallzelle 22a des optischen Sonnenschutzfilters 20a verbunden. Die Steuer- und/oder Regeleinheit 60a ist nicht weiter dargestellt elektrisch mit den Elektrodenschichten der Flüssigkristallzelle 22a verbunden.

Die Steuer- und/oder Regeleinheit 60a und die Sensoreinheit 24a sind teilweise in dem Zwischenrahmen 46a angeordnet. Die Steuer- und/oder Regeleinheit 60a und die Sensoreinheit 24a sind teilweise in dem oberen Zwischenrahmenschenkel 66a des Zwischenrahmens 46a oberhalb des Nasenausschnitts 56a angeordnet. Die Steuer- und/oder Regeleinheit 60a und die Sensoreinheit 24a sind in einem Aufnahmebereich 72a des Zwischenrahmens 46a angeordnet. Der Aufnahmebereich 72a ist in dem oberen Zwischenrahmenschenkel 66a des Zwischenrahmens 46a angeordnet. Der obere Zwischenrahmenschenkel 66a des Zwischenrahmens 46a ist dazu in dem Nasenstegbereich 16a verbreitert ausgebildet. Der Aufnahmebereich 72a ist nach vorne hin durch das Monoscheibenelement 12a begrenzt. Der Aufnahmebereich 72a des Zwischenrahmens 46a ist von einer Vertiefung gebildet. Grundsätzlich wäre jedoch auch eine andere, einem Fachmann als sinnvoll erscheinende Anordnung der Steuer- und/oder Regeleinheit 60a und der Sensoreinheit 24a denkbar.

Die Sensoreinheit 24a ist in einem Betriebszustand zu einer zumindest teilweise Bereitstellung einer Energie zu einer Ansteuerung der Flüssigkristallzelle 22a des optischen Sonnenschutzfilters 20a vorgesehen. Die Sensoreinheit 24a ist während eines Betriebs der Sonnenbrillenvorrichtung 10a zu einer vollständigen Bereitstellung einer Energie zu einer Ansteuerung der Flüssigkristallzelle 22a des optischen Sonnenschutzfilters 20a vorgesehen. Die Sensoreinheit 24a ist während eines Betriebs der Sonnenbrillenvorrichtung 10a zu einer vollständigen Gewinnung einer zu einer Ansteuerung der Flüssigkristallzelle 22a des optischen Sonnenschutzfilters 20a benötigten Energie vorgesehen. Die Sonnenbrillenvorrichtung 10a ist batterielos ausgebildet.

Figur 6 zeigt ein schematisches Ablaufdiagramm eines Verfahrens zur Herstellung, insbesondere einer Montage, der Sonnenbrillenvorrichtung 10a.

Das Verfahren weist einen ersten Verfahrensschritt 74a auf, in welchem der optische Sonnenschutzfilter 20a mit dem Monoscheibenelement 12a verbunden wird. Dabei wird die Flüssigkristallzelle 22a auf eine Innenseite des Monoscheibenelements 12a aufgeklebt. Anschließend wird in einem weiteren Verfahrensschritt 76a der Zwischenrahmen 46a an dem Monoscheibenelement 12a angeordnet. Der Zwischenrahmen 46a wird dabei insbesondere durch elastische Verformung um das Monoscheibenelement 12a gestülpt. Darauf folgt ein weiterer Verfahrensschritt 78a, in welchem der umlaufende Rahmen 26a an dem Zwischenrahmen 46a und dem Monoscheibenelement 12a montiert wird. Dazu werden insbesondere der obere Rahmenschenkel 42a und der untere Rahmenschenkel 44a von oben und unten auf den Zwischenrahmen 46a aufgesetzt und miteinander verbunden. Eine Verbindung kann beispielsweise durch Schweißen, Löten oder Verschrauben erfolgen. Dabei verrasten die Formschlusselemente 32a, 34a des Rahmens 26a mit den Formschlusselementen 28a, 30a des Monoscheibenelements 12a.

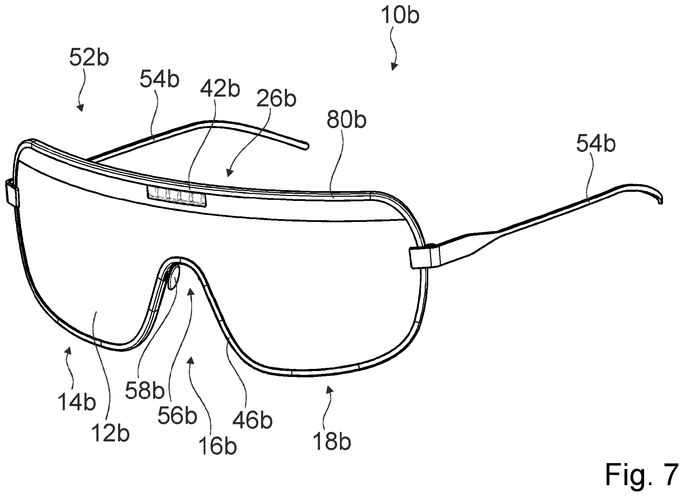

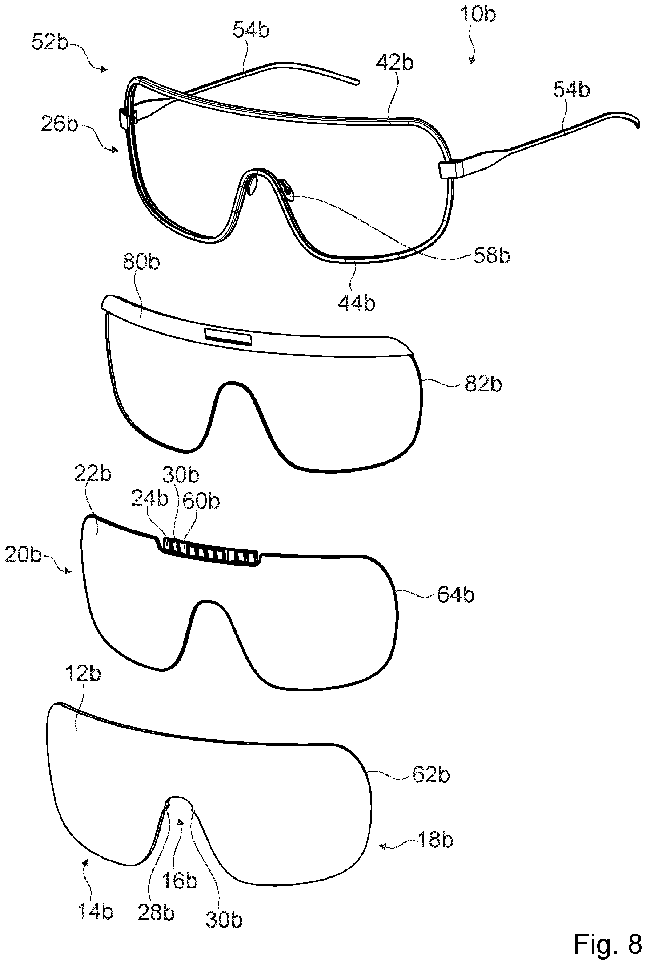

In den Figuren 7 bis 10 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 6 verwiesen werden kann. Zur Unterscheidung der Ausführungsbeispiele ist der Buchstabe a in den Bezugszeichen des Ausführungsbeispiels in den Figuren 1 bis 6 durch den Buchstaben b in den Bezugszeichen des Ausführungsbeispiels der Figuren 7 bis 10 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 6 verwiesen werden.

Die Figur 7 zeigt eine Sonnenbrillenvorrichtung 10b. Die Sonnenbrillenvorrichtung 10b ist von einer Sonnenbrille gebildet. Die Sonnenbrillenvorrichtung 10b ist von einer Monoglas-Sonnenbrille gebildet.

Die Sonnenbrillenvorrichtung 10b umfasst zumindest einen Brillenrahmen 52b. Der Brillenrahmen 52b ist von einem Brillengestell gebildet. Der Brillenrahmen 52b besteht im Wesentlichen aus einem Metallwerkstoff. Der Brillenrahmen 52b weist einen umlaufenden Rahmen 26b auf. Die Sonnenbrillenvorrichtung 10b weist den umlaufenden Rahmen 26b auf. Ferner weist der Brillenrahmen 52b zwei an dem umlaufenden Rahmen 26b beweglich gelagerte Brillenbügel 54b auf. Die Brillenbügel 54b sind jeweils zu einer Auflage auf den Ohren des Benutzers vorgesehen

Der umlaufende Rahmen 26b weist ferner einen oberen Rahmenschenkel 42b und einen unteren Rahmenschenkel 44b auf. Der Rahmen 26b ist in einem Nasenstegbereich 16b frei von einem Zwischensteg zwischen dem oberen Rahmenschenkel 42b und dem unteren Rahmenschenkel 44b ausgebildet.

Ferner weist die Sonnenbrillenvorrichtung 10b ein Monoscheibenelement 12b auf. Das Monoscheibenelement 12b erstreckt sich von einem ersten Sichtbereich 14b über den Nasenstegbereich 16b in einen zweiten Sichtbereich 18b der Sonnenbrillenvorrichtung 10b. Das Monoscheibenelement 12b ist einstückig, insbesondere einteilig, ausgebildet. Der umlaufende Rahmen 26b umgibt eine Außenkante 62b des Monoscheibenelements 12b.

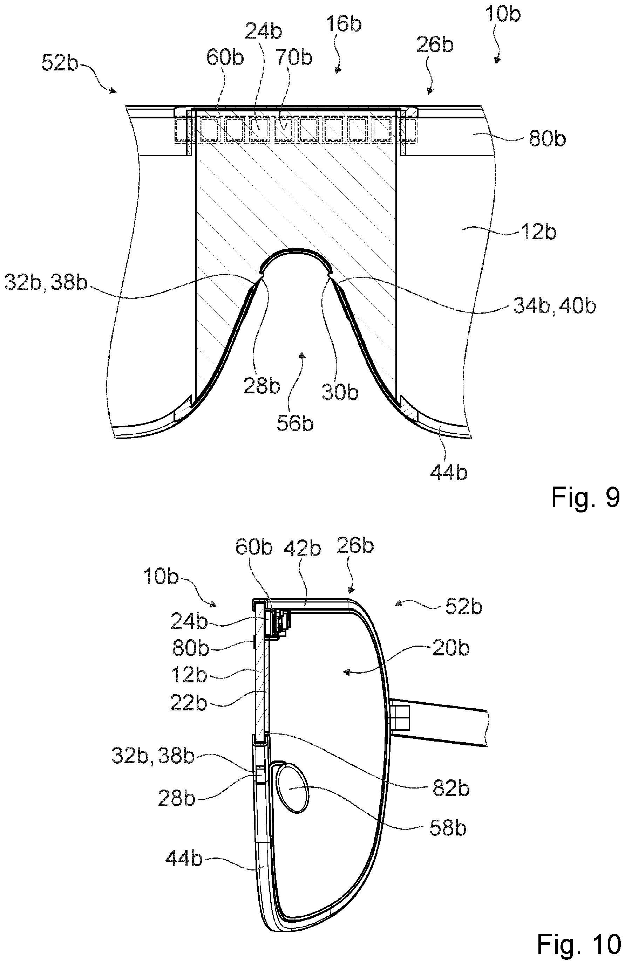

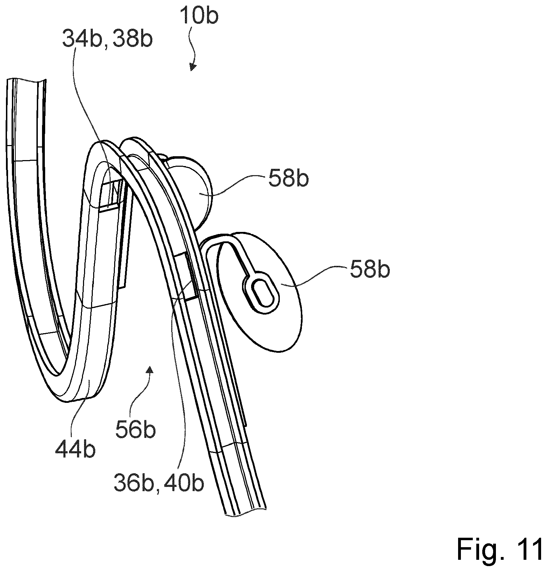

Das Monoscheibenelement 12b ist direkt formschlüssig mit dem umlaufenden Rahmen 26b verbunden. Das Monoscheibenelement 12b ist zumindest in dem Nasenstegbereich 16b formschlüssig mit dem umlaufenden Rahmen 26b verbunden. Das Monoscheibenelement 12b weist zumindest ein Formschlusselement 28b, 30b auf. Das Monoscheibenelement 12b weist beispielhaft zwei Formschlusselemente 28b, 30b in dem Nasenstegbereich 16b auf, wobei das erste Formschlusselement 28b und das zweite Formschlusselement 30b dem unteren Rahmenschenkel 44b zugewandt sind. Der Rahmen 26b weist zumindest ein mit dem zumindest einen Formschlusselement 28b, 30b des Monoscheibenelements 12b korrespondierendes Formschlusselement 32b, 34b auf. Der Rahmen 26b weist beispielhaft zwei Formschlusselemente 32b, 34b auf, wobei das erste Formschlusselement 32b und das zweite Formschlusselement 34b in dem Nasenstegbereich 16b an dem unteren Rahmenschenkel 44b angeordnet sind. Die Formschlusselemente 32b, 34b begrenzen jeweils eine Formschlussausnehmung 38b, 40b. Der Rahmen 26b weist zumindest eine Formschlussausnehmung 38b, 40b auf, welche dazu vorgesehen ist, zumindest ein Formschlusselement 28b, 30b des Monoscheibenelements 12b aufzunehmen. Der Rahmen 26b weist zwei Formschlussausnehmungen 38b, 40b auf, welche an dem Nasenausschnitt 56b angeordnet sind und welche dazu vorgesehen sind, jeweils eines der Formschlusselemente 28b, 30b des Monoscheibenelements 12b aufzunehmen. Die Formschlusselemente 28b, 30b des Monoscheibenelements 12b sind jeweils von einer Rastnase gebildet, welche dazu vorgesehen ist, in eine der Formschlussausnehmungen 38b, 40b des Rahmens 26b einzurasten (Figur 9, 11).

Zugkräfte zwischen dem oberen Rahmenschenkel 42b des Rahmens 26b und dem unteren Rahmenschenkel 44b des Rahmens 26b werden über das Monoscheibenelement 12b übertragen. Zugkräfte zwischen dem oberen Rahmenschenkel 42b des Rahmens 26b und dem unteren Rahmenschenkel 44b des Rahmens 26b werden über die formschlüssige Verbindung zwischen dem Monoscheibenelement 12b und dem Rahmen 26b in dem Nasenstegbereich 16b übertragen. Der obere Rahmenschenkel 42b und der untere Rahmenschenkel 44b sind in dem Nasenstegbereich 16b lediglich über das Monoscheibenelement 12b verbunden.

Die Sonnenbrillenvorrichtung 10b umfasst zumindest einen an dem Monoscheibenelement 12b angeordneten optischen Sonnenschutzfilter 20b. Eine Lichtdurchlässigkeit des optischen Sonnenschutzfilters 20b ist einstellbar ausgeführt. Der optische Sonnenschutzfilter 20b weist zumindest eine Flüssigkristallzelle 22b auf. Die Flüssigkristallzelle 22b ist auf dem Monoscheibenelement 12b angeordnet. Die Flüssigkristallzelle 22b des optischen Sonnenschutzfilters 20b ist stoffschlüssig mit dem Monoscheibenelement 12b verbunden. Die Flüssigkristallzelle 22b des optischen Sonnenschutzfilters 20b ist auf das Monoscheibenelement 12b aufgeklebt. Die Flüssigkristallzelle 22b des optischen Sonnenschutzfilters 20b ist definiert mit einem konstanten Abstand von einem Rand, insbesondere einer Außenkante 62b des Monoscheibenelements 12b beabstandet angeordnet. Bevorzugt ist der Abstand in einem Nasenstegbereich 16b abschnittsweise zu einer Anordnung einer Sensoreinheit 24b des optischen Sonnenschutzfilters 20b vergrößert. Die Flüssigkristallzelle 22b ist mit der Außenkante 64b umlaufend mit einem im Wesentlichen konstanten Abstand zu der Außenkante 62b des Monoscheibenelements 12b angeordnet. Die Flüssigkristallzelle 22b springt gegenüber der Außenkante 62b des Monoscheibenelements 12b zurück.

Die Flüssigkristallzelle 22b weist eine umlaufende Dichtung 82b auf. Die Dichtung 82b dient insbesondere zu einem Schutz der Flüssigkristallzelle 22b.

Des Weiteren weist der optische Sonnenschutzfilter 20b die Sensoreinheit 24b auf. Die Sensoreinheit 24b ist zu einer Erfassung einer Sonneneinstrahlung vorgesehen. Ferner weist der optische Sonnenschutzfilter 20b eine Steuer- und/oder Regeleinheit 60b auf.

Ferner weist die Sonnenbrillenvorrichtung 10b eine Abdeckung 80b zu einer Abdeckung der Steuer- und/oder Regeleinheit 60b und der Sensoreinheit 24b von einer Vorderseite auf.

### Bezugszeichenliste

- 10: Sonnenbrillenvorrichtung
- 12: Monoscheibenelement
- 14: Sichtbereich
- 16: Nasenstegbereich
- 18: Sichtbereich
- 20: Sonnenschutzfilter
- 22: Flüssigkristallzelle
- 24: Sensoreinheit
- 26: Rahmen
- 28: Formschlusselement
- 30: Formschlusselement
- 32: Formschlusselement
- 34: Formschlusselement
- 38: Formschlussausnehmung
- 40: Formschlussausnehmung
- 42: Rahmenschenkel
- 44: Rahmenschenkel
- 46: Zwischenrahmen
- 48: Ausnehmung
- 50: Ausnehmung
- 52: Brillenrahmen
- 54: Brillenbügel
- 56: Nasenausschnitt
- 58: Nasenpad
- 60: Steuer- und/oder Regeleinheit
- 62: Außenkante
- 64: Außenkante
- 66: Zwischenrahmenschenkel
- 68: Zwischenrahmenschenkel
- 70: Sensorfläche
- 72: Aufnahmebereich
- 74: Verfahrensschritt
- 76: Verfahrensschritt
- 78: Verfahrensschritt
- 80: Abdeckung
- 82: Dichtung

## Patentansprüche

1. Sonnenbrillenvorrichtung, insbesondere Sonnenbrille, mit zumindest einem Monoscheibenelement (12a; 12b), welches sich von einem ersten Sichtbereich (14a; 14b) über einen Nasenstegbereich (16a; 16b) in einen zweiten Sichtbereich (18a; 18b) erstreckt, mit zumindest einem an dem Monoscheibenelement (12a; 12b) angeordneten optischen Sonnenschutzfilter (20a; 20b), der zumindest eine Flüssigkristallzelle (22a; 22b) und eine Sensoreinheit (24a; 24b) aufweist, und mit einem umlaufenden Rahmen (26a; 26b),
**dadurch gekennzeichnet, dass**
der umlaufende Rahmen zumindest zu einem Großteil aus einem Metallwerkstoff besteht.

2. Sonnenbrillenvorrichtung nach Anspruch 1,
**dadurch gekennzeichnet, dass**
das Monoscheibenelement (12a; 12b), insbesondere direkt, formschlüssig mit dem umlaufenden Rahmen (26a; 26b) verbunden ist.

3. Sonnenbrillenvorrichtung nach Anspruch 2, **dadurch gekennzeichnet, dass** das Monoscheibenelement (12a; 12b) zumindest ein Formschlusselement (28a, 30a; 28b; 30b) aufweist, wobei der Rahmen (26a; 26b) zumindest ein mit dem Formschlusselement (28a, 30a; 28b; 30b) des Monoscheibenelements (12a; 12b) korrespondierendes Formschlusselement (32a, 34a; 32b, 34b) aufweist.

4. Sonnenbrillenvorrichtung nach Anspruch 3, **dadurch gekennzeichnet, dass** das zumindest eine Formschlusselement (32a, 34a) des Rahmens (26a) von einem Formschlussfortsatz gebildet ist, wobei das Formschlusselement (28a, 30a) des Monoscheibenelements (12a) dazu vorgesehen ist, den Formschlussfortsatz zumindest teilweise zu umgreifen.

5. Sonnenbrillenvorrichtung nach einem der vorhergehenden Ansprüche, **dadurch gekennzeichnet, dass** der Rahmen (26b) zumindest eine Formschlussausnehmung (38b, 40b) aufweist, welche dazu vorgesehen ist, zumindest ein Formschlusselement (28b, 30b) des Monoscheibenelements (12b) aufzunehmen.

6. Sonnenbrillenvorrichtung nach einem der vorhergehenden Ansprüche, **dadurch gekennzeichnet, dass** der Rahmen (26a; 26b) einen oberen Rahmenschenkel (42a; 42b) und einen unteren Rahmenschenkel (44a; 44b) aufweist, wobei der Rahmen (26a; 26b), insbesondere in dem Nasenstegbereich (16a; 16b), frei von einem Zwischensteg zwischen dem oberen Rahmenschenkel (42a; 42b) und dem unteren Rahmenschenkel (44a; 44b) ausgebildet ist, wobei Zugkräfte zwischen dem oberen Rahmenschenkel (42a; 42b) des Rahmens (26a; 26b) und dem unteren Rahmenschenkel (44a; 44b) über das Monoscheibenelement (12a; 12b) übertragen werden.

7. Sonnenbrillenvorrichtung nach einem der vorhergehenden Ansprüche, **dadurch gekennzeichnet, dass** der Rahmen (26a) einstückig, insbesondere einteilig, ausgebildet ist.

8. Sonnenbrillenvorrichtung nach einem der vorhergehenden Ansprüche, **gekennzeichnet durch** einen Zwischenrahmen (46a), welcher zumindest teilweise zwischen dem Rahmen (26a) und dem Monoscheibenelement (12a) angeordnet ist.

9. Sonnenbrillenvorrichtung nach Anspruch 7, **dadurch gekennzeichnet, dass** der Zwischenrahmen (46a) zumindest zu einem Großteil aus einem Kunststoff, insbesondere einem Polymer, besteht.

10. Sonnenbrillenvorrichtung zumindest nach Anspruch 8, **dadurch**
**gekennzeichnet, dass** der Zwischenrahmen (46a), insbesondere in einem Nasenstegbereich (16a), zumindest eine Ausnehmung (48a, 50a) begrenzt.

11. Sonnenbrillenvorrichtung zumindest nach Anspruch 3 und 10, **dadurch**
**gekennzeichnet, dass** sich das zumindest eine Formschlusselement (32a, 34a) des Rahmens (26a) und/oder das zumindest eine Formschlusselement (28a, 30a) des Monoscheibenelements (12a) zumindest teilweise durch die Ausnehmung (48a, 50a) des Zwischenrahmens (46a) hindurch erstreckt.

12. Sonnenbrillenvorrichtung nach Anspruch 10, **dadurch gekennzeichnet, dass** die Ausnehmung (48a, 50a) von einer materiell in zumindest einer Ebene vollständig von dem Zwischenrahmen (46a) umschlossenen Durchgangsausnehmung gebildet ist.

13. Sonnenbrillenvorrichtung nach einem der vorhergehenden Ansprüche, **dadurch gekennzeichnet, dass** die Flüssigkristallzelle (22a; 22b) des optischen Sonnenschutzfilters (20a; 20b) stoffschlüssig mit dem Monoscheibenelement (12a; 12b) verbunden ist.

14. Sonnenbrillenvorrichtung nach einem der vorhergehenden Ansprüche, **dadurch gekennzeichnet, dass** die Flüssigkristallzelle (22a; 22b) des optischen Sonnenschutzfilters (20a; 20b) definiert, insbesondere mit einem konstanten Abstand, von einem Rand des Monoscheibenelements (12a; 12b) beabstandet angeordnet ist.

15. Verfahren zur Herstellung einer Sonnenbrillenvorrichtung (10a; 10b) nach einem der vorhergehenden Ansprüche.
